Europäisches Patentamt

European Patent Office

Office européen des brevets

(19)

(11) Numéro de publication: **0 011 701**
**B1**

(12) **FASCICULE DE BREVET EUROPEEN**

(45) Date de publication du fascicule du brevet: **28.07.82**

(51) Int. Cl.³: **G 06 F 3/04**

(21) Numéro de dépôt: **79103928.2**

(22) Date de dépôt: **12.10.79**

(54) Système de sélection d'interface prioritaire et contrôleur de communication comprenant ce système.

(30) Priorité: **30.11.78 FR 7834432**

(43) Date de publication de la demande:
**11.06.80 Bulletin 80/12**

(45) Mention de la délivrance du brevet:
**28.07.82 Bulletin 82/30**

(84) Etats contractants désignés:
**DE FR GB**

(56) Documents cités:
**EP - A - 0 005 722**
**US - A - 3 353 160**
**US - A - 3 633 163**
**US - A - 3 735 357**

**INSTITUTE OF ELECTRICAL AND ELECTRONICS ENGINEERS. Proceedings of the 1971 IEEE International Computer Society Conference. September 22—24, 1971 Boston, Hardware—Software—Firmware—Trade-Offs New York US WARD:" A Scheme For Dynamic Priority Control in Demand Actuated Multiplexing", pages 51—52**

(73) Titulaire: **International Business Machines Corporation**
**Armonk, N.Y. 10504 (US)**

(72) Inventeur: **Austruy, Pierre**
**7 boulevard Auguste Raynaud**
**F-06100 Nice (FR)**
Inventeur: **Dalboussiere, Gérard**
**Résid. de l'Escours - Villa 19 Chemin de l'Ecours**
**F-06480 La Colle-Loup (FR)**

(74) Mandataire: **Buff, Henri C.**
**COMPAGNIE IBM FRANCE Département de Propriété Industrielle**
**F-06610 La Gaude (FR)**

Courier Press, Leamington Spa, England.

Perfectionnement aux systèmes de sélection d'interface prioritaire

Domaine technique

L'invention concerne un perfectionnement aux systèmes de sélection de circuit d'interface prioritaire. Elle est applicable notamment aux contrôleurs de communication. Elle se rapporte plus particulièrement à des moyens permettant de gérer les transferts de données au travers d'adaptateurs, en tenant compte de priorités.

Les contrôleurs de communications modernes sont des dispositifs destinés à être incorporés dans un système de télétraitement de données, de manière à y gérer non seulement les transmissions sur les diverses lignes qui y sont rattachées, mais en outre l'exécution de certaines fonctions de télétraitement. Dans de nombreuses installations, la commande principale du réseau de télétraitement est concentrée dans une ou plusieurs unité(s) centrale(s) (CPU) contenant un répertoire des règles de traitement des données provenant de ou se dirigeant vers les stations terminales du réseau de télétraitement. L'envoi et la réception des données au travers des lignes de transmission (lignes physiques ou faisceaux hertziens) est géré par des contrôleurs de communications placés sous la dépendance du ou des CPU. Mais outre l'exécution de commandes de transmission au sens strict du terme, le contrôleur de communications est chargé d'exécuter des fonctions dudit répertoire, notamment des fonctions relevant directement des procédures standard de transmission. De ce fait, le CPU se trouve libéré des tâches correspondantes et peut se consacrer à l'exécution d'autres travaux.

Le contrôleur de communications est donc un ensemble intelligent relativement complexe. Cette intelligence est en majorité concentrée dans une ou plusieurs unités de commande centrales (CCU). Les CCU sont reliées, d'une part aux terminaux au travers d'adaptateurs dits de lignes, et d'autre part au(x) CPU au travers d'adaptateurs dits de canaux. Lorsqu'un adaptateur veut effectuer un transfert de données, il fait une demande de service et attend la réponse du CCU l'autorisant à transmettre.

Etat de la technique

Toutes les tâches confiées aux adaptateurs n'ont pas la même urgence. Pour en tenir compte, on attribue à ces tâches, des degrés de priorités. La gestion des adaptateurs est relativement simple lorsque chacun d'entre eux ne se voit confier que des tâches de même priorité. Il suffit alors de déterminer l'identité des adaptateurs demandeurs de service pour savoir lequel doit être satisfait le premier lorsque le CCU émettra vers les adaptateurs un ordre dit de sélection.

Mais il n'est pas toujours possible de procéder ainsi car l'architecture du système de télétraitement exige souvent que des tâches de priorités différentes puissent être confiées à une même adaptateur. On peut alors répartir les adaptateurs par groupes, et adjoindre à chaque group un système d'auto-sélection. Dans ce cas, lorsque le CPU manifeste son désir de communiquer avec les terminaux, les adaptateurs du même groupe se consultent mutuellement pour déterminer lequel d'entre eux doit réagir le premier. Mais cette auto-sélection ne s'effectue pas instantanément ce qui entraîne une perte de temps préjudiciable au rendement du contrôleur.

A noter que bien que l'on traitera ici essentiellement d'adaptateurs et de contrôleurs de communications, l'invention s'applique à tout ensemble de dispositifs ou circuits d'interface entre des organes demandeurs de services de priorités différentes et une unité centrale.

Pour remédier aux inconvénients de sélection mentionnés plus haut, on a proposé, dans la demande de brevet européenne No. EP—A—5722 sous priorité de la demande française No. 78 17709, déposée par la demanderesse en France le 7 juin 1978, de faire précéder la sélection proprement dite par une opération dite de pré-sélection. Celle-ci se déroule de manière asynchrone, quasi indépendamment du CCU. Du fait de la pré-sélection les adaptateurs d'un même groupe se consultent sans intervention significative du CCU et désignent eux-mêmes celui qui sera servi le premier dès que le CCU ordonnera une sélection. Ce système fonctionne bien lorsque le cycle de pré-sélection est relativement bref. Tel n'est pas le cas lorsque les adaptateurs sont nombreux et/ou éloignés les uns des autres et qu'il faut prévoir des circuits de commande (ou interface) pour attaquer les lignes reliant les adaptateurs et le CCU. Si l'intervalle de temps séparant le démarrage des opérations de pré-sélection de l'arrivée de l'ordre de sélection est insuffisant à l'exécution desdites opérations de pré-sélection, le système devient instable et ne peut fonctionner.

On a aussi pensé à accélérer la sélection de circuits adaptateurs au moyen de circuits logiques connectés selon une structure dite "en arbre" ou en pyramide (voir brevet US—A—3 353 160 délivré à la demanderesse le 14 novembre 1967).

Exposé de l'invention

La présente invention a pour objet un système de pré-sélection asynchrone d'adaptateurs à servir en tenant compte de priorités, système permettant de minimiser les risques d'instabilités dûs aux délais nécessaires aux opérations de pré-sélection.

Le système de sélection de circuits d'interface placés entre des organes demandeurs de services affectés de priorités différentes et une unité centrale de la présente invention comporte des moyens pour répartir les circuits d'interface formant un premier étage de pyramide en sous-groupes pourvus de moyens de pré-sélection asynchrones pour pré-sélecter le circuit d'interface le plus prioritaire au sein de chacun desdits sous-groupes, des moyens pour interfacer chacun desdits sous-groupes de premier étage à l'aide d'un circuit d'interface de second étage, des moyens pour répartir lesdits circuits d'interface de second étage en sous-groupes pourvus de moyens de pré-sélection asynchrone pour pré-sélecter le circuit d'interface le plus prioritaire au sein de chaque sous-groupe de second étage, des moyens pour poursuivre l'organisation de type pyramidal du système de sélection et relier le dernier étage de la pyramide au bus de l'unité centrale, des moyens pour construire le trajet reliant l'unité centrale au circuit d'interface de premier étage le plus prioritaire, à travers ladite pyramide.

L'invention est exposée ci-après plus en détail à l'aide de dessins qui représentent un mode de réalisation préféré de celle-ci.

Brève description des figures

Figure 1: schéma de principe d'un système de télétraitement.

Figure 2: schéma de principe de répartition des interfaces selon l'invention.

Figures 3 et 4: modes de réalisation des circuits d'interface de la figure 2.

Description d'un mode de réalisation de l'invention

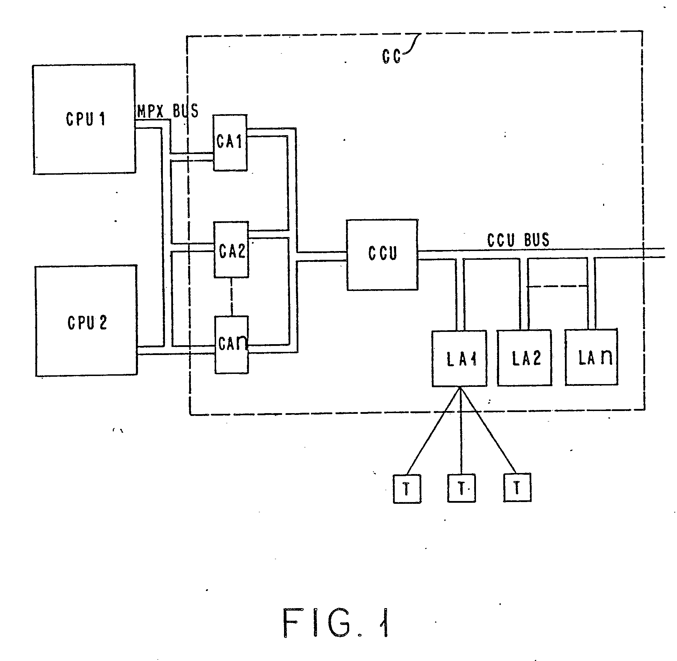

La figure 1 montre de façon très schématique l'architecture d'un contrôleur de communications (CC) situé dans un réseau de télétraitement. L'élément intelligent de CC, à savoir son unité centrale de commande (CCU) gère les données transitant entre des terminaux T et des unités centrales de traitement CPU 1 et CPU 2. Tout en effectuant sa tâche, le CCU applique des procédures et protocoles de transmissions préalablement définis. Il est relié à des canaux multiplex (MPX BUS) des calculateurs CPU 1 et CPU 2 au travers d'adaptateurs de canaux CA1, CA2,..., CAn. Il est aussi relié à des terminaux T au travers d'adaptateurs de lignes LA1, LA2,..., LAn, connectés à un bus dit CCU BUS. Ces adaptateurs sont répartis par groupes, ici au nombre de deux, l'un contenant les CA, l'autre les LA. Des tâches de priorités différentes peuvent être confiées à chaque adaptateur. Tout adaptateur désirant communiquer avec le CCU forme une demande de service. Mais le CCU ne peut satisfaire ces demandes à tout moment. Lorsqu'il est disposé à le faire, il en avise les adaptateurs.

Ceux-ci doivent alors réagir en respectant les règles de priorité.

Pour ce faire, on utilise des moyens de pré-sélection grâce auxquels l'état des demandes de service internes, c'est-à-dire formulées au sein du groupe d'adaptateurs, est tenu à jour et est pris en considération de manière asynchrone pour préparer la sélection de l'adaptateur qui sera servi le premier.

Ces moyens permettent de réduire la phase synchrone de sélection à une opération très simple, puisqu'elle aura été précédée par une pré-sélection asynchrone réalisant la majeure partie des opérations de désignation de l'adaptateur à servir le premier dès que le CCU le permettra.

Dans la demande de brevet français citée plus haut, les adaptateurs d'un même groupe sont soumis aux opérations de pré-sélection, en série. En d'autres termes, ils se consultent en commençant à l'une des extrémités du groupe et en avançant de proche en proche jusqu'à l'autre extrémité. La pré-sélection est démarrée par l'apparition d'un signal désigné par TD. Quant à la sélection proprement dite, elle est ordonnée par le CCU qui transmet sur son bus une commande spéciale, désignée ici par TA, en même temps qu'une instruction de sélection. Lorsque l'intervalle de temps séparant TD de TA est inférieur à la durée du cycle du pré-sélection de manière quasi permanente, le processus de l'art antérieur devient instable et ne peut donc se dérouler correctement.

Pour remédier à ces inconvénients et diminuer les risques d'instabilité la présente invention propose une architecture de type pyramidal.

En d'autres termes, au lieu d'organiser la pré-sélection des adaptateurs en série, ceux-ci sont répartis en sous-groupes au sein de chacun desquels se déroulent des opérations de pré-sélections indépendantes les unes des autres. Parallèlement au déroulement de ces opérations, des pré-sélections inter-sous-groupes sont effectuées, et ainsi de suite jusqu'à atteindre l'étage le plus élevé de la pyramide lequel est relié au CCU BUS.

Pour ce faire chaque sous-groupe d'adapt-ateurs est relié à un interface d'attaque de ligne. Ces interfaces, constituant un second étage de la pyramide, sont euxmêmes répartis en sous-groupes pourvus chacun d'un dispositif de pré-sélection autonome. Chaque sous-groupe d'interfaces du second étage est lui-même relié à un interface de troisième étage. Et ainsi de suite jusqu'à arriver à l'étage le plus élevé de la pyramide, à savoir, le plus proche du CCU BUS.

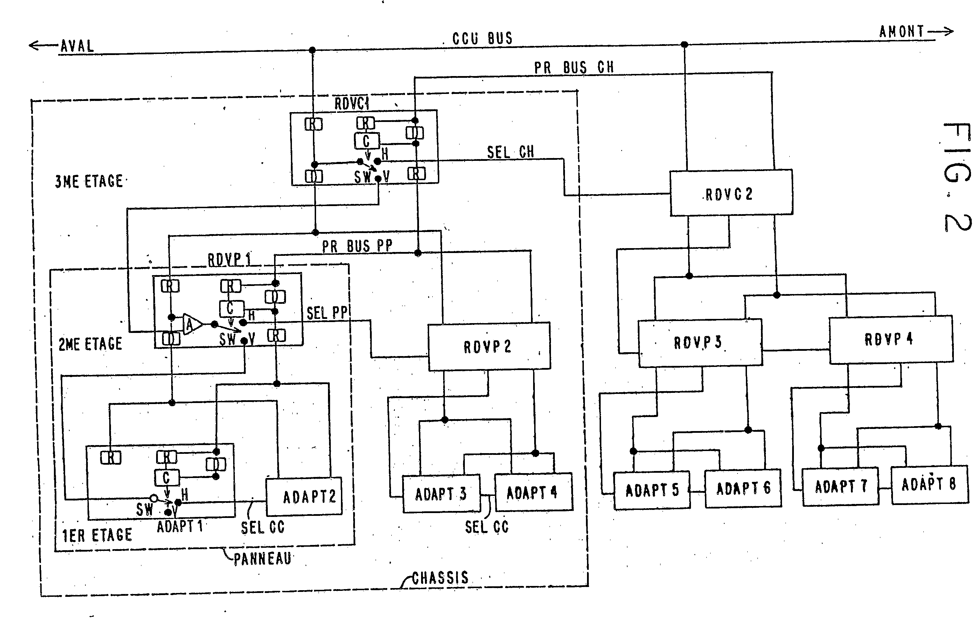

La figure 2 montre de façon schématique un exemple de réalisation de l'invention pour une pyramide à trois étages. On remarquera que, pour ce mode de réalisation, les différents éléments ont été physiquement séparés. Chaque interface est mis sur une carte différente, désignée par ADAPT pour les interfaces adaptateurs, et par RDVP et RDVC pour les interfaces d'attaque de lignes des deuxième et troisième étages. Chaque sous-groupe d'adaptateurs est mis sur un panneau comportant un interface d'attaque de ligne RDVP appartenant au deuxième étage de la pyramide. Lesdits panneaux sont eux-mêmes répartis en sous-groupes placés sur des châssis comportant chacun un interface d'attaque RDVC appartenant au troisième étage de la pyramide. Enfin, ce troisième étage est relié au CCU BUS par l'intermédiaire d'une ligne destinée à recevoir le signal TA et à le transmettre aux autres cartes du système pyramidal. Chaque sous-groupe de cartes (ADAPT, RDVP et RDVC) est pourvu de moyens de présélection comportant un bus de priorités (PR BUS) et une ligne de sélection (SEL). Tous ces bus et lignes sont distingués les uns des autres par un préfixe: CC pour le premier étage, PP pour le deuxième et CH pour le troisième.

Grâce à cette organisation, les circuits de pré-sélection sont plus courts que celui que l'on aurait obtenu si toutes les cartes avaient été mises en série sur un circuit unique conformément aux enseignements de l'invention sus-mentionnée. Dans le cas présent, les pré-sélections s'effectuent simultanément et indépendamment au sein de chaque sous-groupe.

Pour que le système puisse fonctionner, il faut y rajouter des moyens de liaison inter-étages. Ceux-ci auront notamment pour but de propager les informations de priorité de bas en haut de la pyramide et l'ordre de sélection en sens inverse.

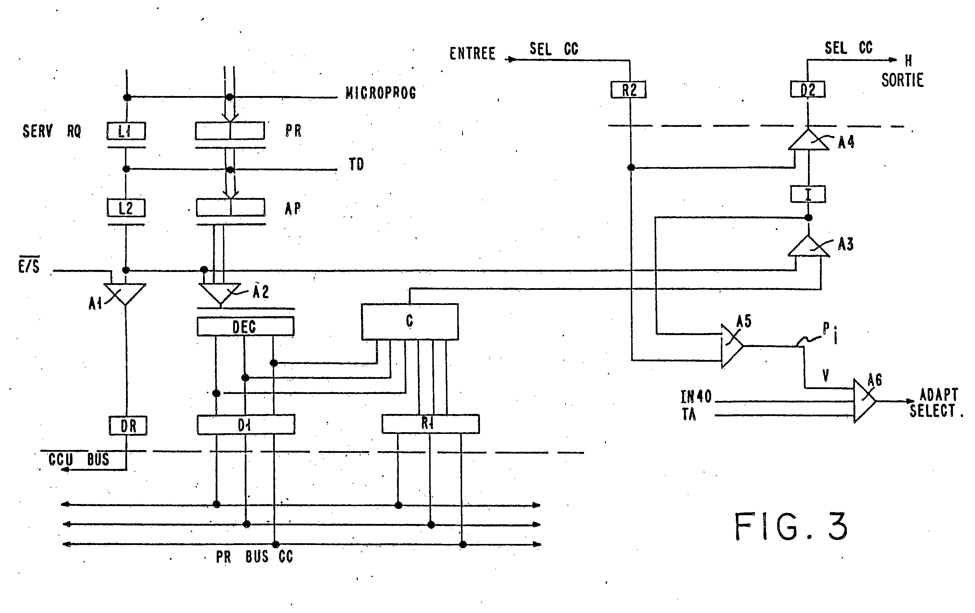

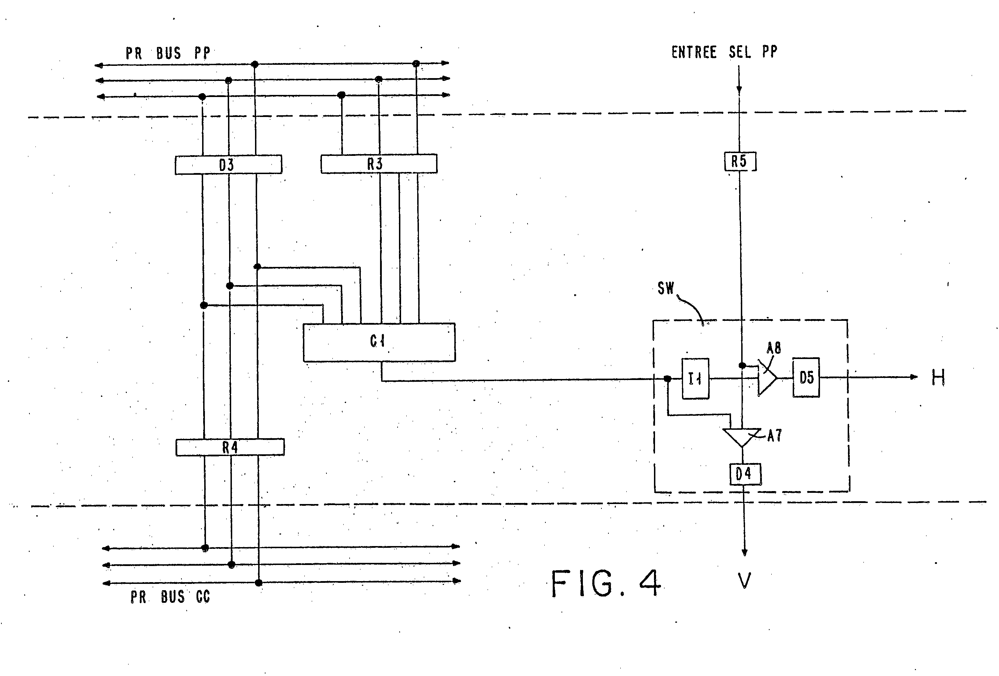

Chaque sous-groupe de cartes est affecté d'un bus de priorité (PR BUS) et d'une ligne (SEL) de propagation série des informations de pré-sélection. On notera que le terme interface est ici pris dans son sens le plus large pour désigner aussi bien les circuits d'une carte de type ADAPT que ceux d'une carte de type RDVP ou RDVC. Chaque interface comporte essentiellement des récepteurs (R), des circuits d'attaque (D), un comparateur (C) et un commutateur (SW). Toutefois, les interfaces ADAPT diffèrent légèrement des interfaces de type RDVP, ou RDVC, comme le montrent les figures 3 et 4.

On a représenté sur la figure 2 un mode de réalisation d'un interface de type ADAPT. Un dispositif, non représenté sur la figure, détermine le degré de priorité le plus élevé parmi ceux des demandes formulées par les organes desservis par cet adaptateur et charge ce degré dans un registre PR. Ayant ici fixé à trois le nombre total de degrés de priorité du système, les registres de type PR ont deux positions de bits. Le chargement de PR est réalisé en même temps que l'enclenchement d'une bascule L1, de manière asynchrone par rapport au CCU, et notamment sur commande d'un microprogramme (non représenté) régissant par ailleurs le fonctionnement de l'adaptateur. La bascule L1 traduit simplement la présence d'une demande de service SERV RQ. A l'apparition du signal TD=1, le contenu de L1 est transféré dans une bascule L2 dite de demande de service d'adaptateur, tandis que le contenu de PR est transféré dans un autre registre désigné par AP. On notera que, dans le mode de réalisation de l'invention, choisi à titre d'exemple, on a profité de l'existence d'un signal appartenant à la procédure classique d'échanges sur le CCU BUS entre CCU et adaptateurs et apparaissant à une fréquence convenable pour faire jouer à ce signal le rôle de TD. Dans ce cas, TD est donc fourni par le CCU, ce qui permet d'économiser une horloge, et de simplifier les opérations destinées à garantir la non modification du contenu de AP durant l'opération de sélection proprement dite. Lorsque le niveau logique d'une ligne dite de commande d'entrée/sortie du CCU BUS passe à zéro ($\overline{E/S}$=1), la demande de service de l'adaptateur (L2=1) est signalée au CCU, par ouverture de la porte A1. Le niveau de tension nécessaire à l'attaque du CCU BUS est fourni par un circuit DR. La demande de service de l'adaptateur (L2=1) commande aussi l'ouverture d'une porte A2 transmettant le contenu de AP à un circuit de décodage désigné par DEC. La sortie de DEC comporte trois fils, un par niveau de priorité possible. Ces fils sont connectés au PR BUS CC à travers un circuit d'attaque (D1). Une fonction logique OU est réalisée entre le contenu du PR BUS au niveau de l'adaptateur considéré et la sortie de D1. Un circuit récepteur R1 remet en forme l'information résultant de ladite fonction OU. La sortie de R1 est soumise en C à une comparaison logique avec l'information issue de DEC. La sortie de C est portée au niveau logique 1 lorsque la sortie de DEC traduit la présence d'une demande de service interne à l'adaptateur considéré, de degré de priorité égal à celui de la priorité la plus élevée manifestée sur le PR BUS CC.

La sortie de C est connectée à l'entrée d'une porte A3 dont l'ouverture est commandée par la sortie de L2. La sortie de A3 est reliée, à travers un inverseur I, à un circuit logique ET désigné par A4. La seconde entrée de A4 est connectée à la ligne SEL CC entrant sur l'interface ADAPT considéré, à travers un récepteur R2 remettant en forme les impulsions reçues sur cette ligne. La sortie de A4 attaque la ligne SEL CC sortant de l'adaptateur, à travers un circuit D2 correspondant à la ligne reliée au point H de chaque adaptateur de la figure 2. D'autre part, les sorties de R2 et A3 sont reliées aux entrées d'un autre circuit logique ET désigné par A5. La sortie de A5 fournit l'information de pré-sélection $P_i$ relative à l'adaptateur de rang "i" considéré. Cette sortie, correspondant à la ligne reliée au point V de chaque adaptateur de la figure 2, est connectée à l'une des entrées d'un circuit logique ET à trois entrées, désigné par A6. Les autres entrées reçoivent l'une le signal TA et l'autre un signal dit d'opération de sélection désigné par IN 40. Ce dernier signal provient du décodage d'un mot fourni par le CCU manifestant son désir d'effectuer l'opération dite de sélection, donc traduisant sa disponibilité pour communiquer avec les adaptateurs. Il est reconnu par tous les adaptateurs du groupe, mais seul l'adaptateur pre- sélectionné pourra y répondre puisque l'une des entrées de A6 est reliée à la sortie de A5. En pratique, on pourra mettre, entre A5 et A6 une bascule S dont on verra le rôle plus loin.

Le fonctionnement des dispositifs de sélection d'un adaptateur de rang "i" au sein de tout sous-groupe obéit aux relations logiques suivantes, dans lesquelles les fonctions logiques ET et OU sont respectivement représentées par un point (.) et par un plus (+).

(1) $PR_i$: niveau de priorité chargé dans le registre PR. Ce chargement est effectué à un rythme défini ici par le microprogramme.

(2) $AP_i$: contenu du registre AP. $AP_i = PR_i \cdot TD$.

(3) APB: niveaux de priorités manifestés sur le PR BUS CC.

$$APB = AP'_1 + AP'_2 + \ldots + AP'_i + \ldots + AP'_n$$

"n" étant le nombre d'adaptateurs du sous-groupe considére. (On notera que dans l'exemple décrit sur la figure 2, n=2) et $AP'_i = AP_i \cdot (SERV\ RQ)$, puisque l'information contenue dans le registre AP n'est mise sur le PR BUS CC que si SERV RQ=1.

(4) $P_i$: condition de pré-sélection.

$$P_i = (SERV\ RQ) \cdot SI \cdot (AP'_i = APB)$$

ou SI est le niveau logique sur la ligne SEL CC à l'entrée de l'adaptateur considéré.

(5) SO: niveau logique de la ligne SEL CC à la sortie de l'adaptateur considéré.

$$SO = SI \cdot [\overline{SERV\ RQ} + SERV\ RQ \cdot (AP_i \geq APB)]$$

$$SO = SI \cdot \overline{[SERV\ RQ} + SERV\ RQ \cdot (AP_i < APB)]$$

APB désignant dans cette dernière expression, le niveau de la priorité la plus élevée apparaissant dans

$$AP'_1 + AP'_2 + \ldots + AP'_i + \ldots AP'_n.$$

Chaque adaptateur est, en outre, pourvu, entre A5 et A6, de la bascule sélection S susmentionnée. Après chaque cycle de pré-sélection, un bit de valeur binaire 1 est mist dans la bascule S de l'adaptateur présélectionné ($P_i=1$), au sein de chaque sous-groupe d'adaptateurs, tandis que les bascules S des autres adaptateurs sont mises a zéro.

L'ensemble des circuits logiques A3, A4, A5, A6 et I joue donc le rôle du commutateur SW représenté dans ADAPT 1 (voir figure 2). Lorsque SO=1, SW est sur sa position H; lorsque $P_i=1$, il est sur la position V. Lorsque le signal TA est au niveau logique haut, tous les adaptateurs décoderont et reconnaîtront l'ordre de sélection (IN 40) que le CC pourra envoyer, mais sera sélectionné seul celui pour lequel $P_i=1$,

c'est-à-dire celui dont la bascule est dans la position 1.

On a représenté sur la figure 4 un circuit de pré-sélection appartenant à un interface de deuxième étage de la pyramide, mais il convient de noter que ceux du troisième sont semblables à celui-ci. Des récepteurs (R3, R4, R5) servent à remettre en forme les signaux entrant dans l'interface. Des circuits (D3, D4, D5) sont prévus pour attaquer les lignes sortant de l'interface. Un comparateur C1 compare les priorités des demandes de services du sous-groupe d'adaptateurs desservi par l'interface RDVP considéré, à celles des demandes des autres sous-groupes d'adaptateurs desservis par les autres RDVP du même sous-groupe d'interfaces de deuxième étage. Un ensemble logique comportant deux portes (A7, A8) et un inverseur (I1) joue le rôle de commutateur SW. Il oriente la construction du trajet menant à l'adaptateur à servir soit verticalement (ce qui correspond à placer SW en position V), soit horizontalement (SW en position H).

La sortie de C1 est au niveau logique 1 lorsque les priorités les plus élevées manifestées sur les PR BUS CC et PR BUS PP sont égales. Elle est au niveau logique zéro lorsque la priorité la plus élevée sur PR BUS CC est inférieure à la priorité la plus élevée sur PR BUS PP.

Les priorités manifestées sur le PR BUS PP résultent de la somme logique des priorités des demandes de service passant par les interfaces RDVP appartenant à un même sous-groupe d'interfaces de second étage. Elles correspondent donc aux priorités des demandes passant par les adaptateurs du châssis considéré.

Pour illustrer le fonctionnement du système de l'invention, supposons qu'à un instant donné les priorités les plus élevées des demandes des adaptateurs de la figure 2 soient les suivantes:

| ADAPT 1: degré de priorité | un |
| ADAPT 2: degré de priorité | zéro * |
| ADAPT 3: degré de priorité | deux ** |
| ADAPT 4: degré de priorité | un |
| ADAPT 5: degré de priorité | deux |
| ADAPT 6: degré de priorité | un |
| ADAPT 7: degré de priorité | zéro |
| ADAPT 8: degré de priorité | un |

\* priorité la plus élevée
\*\* priorité la plus basse pour l'exemple considéré.

Chaque sous-groupe effectue ses opérations de pré-sélection indépendamment des autres sous-groupes. Au premier étage, les pré-sélections désignent donc:

ADAPT 2 .
ADAPT 4 .
ADAPT 6 .
ADAPT 7 .

Les priorités reportées au second étage sont donc:

RDVP 1: degrés de priorité zéro et un ·
RDVP 2: degrés de priorité un et deux ·
RDVP 3: degrés de priorité un et deux ·
RDVP 4: degrés de priorité zéro et un ·

Les interfaces les plus prioritaires, désignés par les opérations de pré-sélection du deuxième étage sont donc RDVP 1 pour le sous-groupe d'interface (RDVP 1, RDVP 2), et RDVP 4 pour le sous-groupe (RDVP 3, RDVP 4).

Les priorités les plus élevées reportées au troisième étage sont toutes deux zéro pour RDVC 1 et RDVC 2. Il y a donc conflit de priorité, mais RDVC 1 étant l'interface le plus en aval sur la ligne SEL CH place son commutateur SW sur la position V et se sert le premier. Par conséquent, le trajet du CCU BUS à l'adaptateur à servir en premier passe par RDVC 1 et RDVP 1 pour aboutir à ADAPT 2. C'est bien l'adaptateur qui aurait été servi si l'on avait utilisé un système de pré-sélection unique desservant les adaptateurs ADAPT 1 à ADAPT 8 en série, mais le trajet qui y mènerait à partir du CCU BUS aurait été plus long.

Bien que l'on ait décrit dans ce qui précède et représenté sur les dessins les caractéristiques essentielles de l'invention appliquées à un mode de réalisation préféré de celle-ci, il est évident que l'homme de l'art peut y apporter toutes modifications de forme ou de détail qu'il juge utiles, sans pour autant sortir du cadre de ladite invention.

**Revendications**

1. Système de sélection de circuits d'interface placés entre des organes demandeurs de services affectés de priorités différentes et une unité centrale, caractérisé en ce qu'il comporte:

des moyens pour répartir lesdits circuits d'interface formant un premier étage de pyramide en sous-groupes pourvus de moyens de pré-sélection asynchrones pour pré-sélecter le circuit d'interface le plus prioritaire au sein de chacun desdits sous-groupes,

des moyens pour interfacer chacun desdits sous-groupes de premier étage à l'aide d'un circuit d'interface de second étage,

des moyens pour répartir lesdits circuits d'interface de second étage en sous-groupes pourvus de moyens de pré-sélection asynchrone pour pré-sélecter le circuit d'interface le plus prioritaire au sein de chaque sous-groupe de second étage,

des moyens pour poursuivre l'organisation de type pyramidal du système de sélection et relier le dernier étage de la pyramide au bus de l'unité centrale,

des moyens pour construire le trajet reliant l'unité centrale au circuit d'interface de premier étage le plus prioritaire, à travers ladite pyramide.

2. Système de sélection de circuits d'interface selon la revendication 1 caractérisé en ce que lesdits moyens pour poursuivre l'organisation de type pyramidal du système de sélection comportent eux-mêmes:

des moyens pour interfacer chacun des sous-groupes d'un étage considéré à l'aide d'un circuit d'interface d'étage suivant, lesdits circuits d'interface d'étage suivant étant eux-mêmes pourvus de moyens de présélection asynchrone pour sélecter le circuit d'interface le plus prioritaire parmi lesdits circuits d'interface d'étage suivant; et

des moyens commandés par les moyens de présélection pour construire le trajet reliant l'unité centrale à l'interface de premier étage le plus prioritaire, à travers ladite pyramide.

3. Système de sélection de circuit d'interface selon l'une des revendications 1 ou 2 caractérisé en ce que lesdits moyens de présélection asynchrone de chaque sous-groupe comportent:

un bus de priorité reliant les interfaces du sous-groupe,

des moyens de communication à travers ledit bus de priorité, des degrés des priorités des demandes de service formulées auprès des autres interfaces du sous-groupe,

des moyens de comparaison fournissant une information logique lorsque la priorité la plus élevée formulée auprès de l'interface considéré est de degré au moins égal à celui de la priorité la plus élevée apparaissant sur le bus de priorité au niveau dudit interface, des moyens de commutation,

des moyens de sélection parcourant ledit sous-groupe d'aval en amont et sensible à l'information logique fournie par lesdits moyens de comparaison pour fournir une information logique de pré-sélection et de commande desdits moyens de commutation.

4. Système de sélection de circuit d'interface selon la revendication 3, caractérisé en ce que lesdits moyens de commutation sont connectés de manière à orienter la construction du trajet menant du bus de l'unité centrale à l'adaptateur de premier étage le plus prioritaire à travers les interfaces de la pyramide, soit horizontalement sur le même étage, soit verticalement vers l'étage adjacent selon que l'interface considéré n'aura pas été pré-sélecté ou l'aura été.

5. Système de sélection de circuit d'interface selon la revendication 4 caractérisé en ce qu'il est incorporé dans un contrôleur de communications, dans lequel lesdits interfaces de premier étage sont des adaptateurs et ceux des autres étages de la pyramide sont des interfaces d'attaque de lignes.

6. Système de sélection de circuit d'interface selon la revendication 5 caractérisé en ce que les adaptateurs sont individuellement montés sur des cartes, chaque sous-groupe de cartes est placé sur un panneau pourvu en outre d'un interface d'attaque de second étage de la pyramide et chaque sous-groupe de panneaux est monté sur un châssis pourvu lui aussi d'un interface d'attaque de troisième étage de la pyramide.

7. Contrôleur de communication comportant un système de sélection de circuits adaptateurs placés entre des terminaux demandeurs de services de priorités différentes et une unité centrale de communication, lesdits circuits adaptateurs étant répartis en sous-groupes ou cartes, lesdites cartes étant placées sur des panneaux, lesdits panneaux étant à leur tour répartis en sous-groupes placés sur des châssis, ledit système étant caractérisé en ce qu'il comporte:

des premiers moyens de pré-sélection asynchrone pour pré-sélecter l'adaptateur le plus prioritaire au sein de chaque panneau,

des seconds moyens de pré-sélection asynchrone pour pré-sélecter le panneau comportant l'adaptateur le plus prioritaire au sein de chaque châssis,

des troisièmes moyens de pré-sélection asynchrone pour pré-sélecter le châssis comportant le panneau incluant lui-même l'adaptateur le plus prioritaire,

des moyens pour construire le trajet reliant l'unité centrale à l'adaptateur le plus prioritaire à travers lesdits moyens de présélection.

## Patentansprüche

1. System zur Auswahl von Schnittstellenschaltungen, die zwischen Bedienung anfordernden Einrichtungen mit verschiedenen Prioritäten und einer Zentraleinheit liegen, gekennzeichnet durch folgende Mittel:

— Mittel zum Aufteilen dieser, eine erste Pyramidenstufe bildenden Schaltungen in Untergruppen, die mit asynchronen Vorauswahlmitteln versehen sind, um die Schnittstellenschaltung mit der höchsten Priorität innerhalb einer jeden Untergruppe vorauszuwählen,

— Mittel zum Herstellen einer Schnittstelle für jede Untergruppe der ersten Stufe mit Hilfe einer Schnittstellenschaltung der zweiten Stufe,

— Mittel zum Aufteilen dieser Schnittstellenschaltungen der zweiten Stufe in mit asynchronen Vorauswahlmitteln ausgerüsteten Untergruppen zur Vorauswahl der Schnittstellenschaltung mit der höchsten Priorität aus jeder Untergruppe der zweiten Stufe,

— Mittel zur Weiterausbildung der pyramidenförmigen Organisation des Auswahlsystems und zum Anschluß der letzten Stufe der Pyramide an die Sammelleitung der Zentraleinheit, und

— Mittel zum Herstellen eines Übertragungsweges, der die Zentraleinheit mit der die höchste Priorität besitzenden Schnittstellenschaltung der ersten Stufe über diese Pyramide verbindet.

2. System zur Auswahl von Schnittstellenschaltungen nach Anspruch 1, dadurch gekennzeichnet, daß diese Mittel zur Weiterausbildung der pyramidenförmigen Organisation des Auswahlsystems folgende Mittel aufweisen:

— Mittel zum Herstellen einer Schnittstelle zwischen den Untergruppen einer in Betracht gezogenen Stufe mit Hilfe einer Schnittstellenschaltung der folgenden Stufe, wobei die Schnittstellenschaltungen der folgenden Stufe selbst mit asynchronen Vorauswahlmitteln versehen sind, um die Schnittstellenschaltung mit der höchsten Priorität unter diesen Schnittstellenschaltungen der folgenden Stufe auszuwählen; und

— durch die Vorauswahlmittel gesteuerte Mittel zum Herstellen eines Übertragungsweges, der die Zentraleinheit mit der Schnittstelle der ersten, die höchste Priorität besitzenden Stufe über diese Pyramide verbindet.

3. System zur Auswahl von Schnittstellenschaltungen nach einem der Ansprüche 1 oder 2, dadurch gekennzeichnet, daß die asynchronen Vorauswahlmittel jeder Untergruppe einschließen:

— eine Prioritätssammelleitung, die die Schnittstellen der Untergruppe verbindet,

— Mittel zur Übertragung über diese Prioritätssammelleitung der Prioritätsgrade der an den anderen Schnittstellen der Untergruppe gebildeten Bedienungsanforderungen,

— Vergleichsmittel, die eine logische Information geben, wenn die höchste an die betreffende Schnittstelle gebildete Priorität einen Grad hat, der wenigstens dem der höchsten Priorität gleichkommt, die auf der Prioritätssammelleitung auf der Ebene dieser Schnittstelle erscheint;

— Schaltmittel, und

— Auswahlmittel, die diese Untergruppe von unten nach oben durchlaufen, und die auf die von diesen Vergleichsmitteln gelieferte logische Information ansprechen, um eine logische Information zur Vorauswahl und zum Steuern dieser Schaltmittel zu liefern.

4. System zur Auswahl von Schnittstellenschaltungen nach Anspruch 3, dadurch gekennzeichnet, daß die Schaltmittel so geschaltet sind, daß sie den Übertragungsweg, der von der Sammelleitung der Zentraleinheit zum Adapter der ersten, die höchste Priorität aufweisenden Stufe über die Pyramidenschnittstellen führt, entweder horizontal auf der gleichen Stufe, oder aber vertikal zur nächstliegenden Stufe ausrichten, je nachdem die berücksichtigte Schnittstelle vorausgewählt worden ist oder nicht.

5. System zur Auswahl von Schnittstellenschaltungen nach Anspruch 4, dadurch gekennzeichnet, daß es in einer Kommunikationssteuereinheit enthalten ist, in welcher die Schnittstellen der ersten Stufe Adapter sind, und die der anderen Stufen der Pyramide Leitungstreiber-Schnittstellen darstellen.

6. System zur Auswahl von Schnittstellenschaltungen nach Anspruch 5, dadurch gekennzeichnet, daß die Adapter individuell auf Karten angebracht sind, wobei jede Kartenuntergruppe auf einer außerdem mit einer Treiberschnittstelle der zweiten Pyramidenstufe versehenen Platte angeordnet ist, und jede Untergruppe der Platten auf einem Rahmen angebracht ist, der ebenfalls eine Treiberschnittstelle der dritten Pyramidenstufe aufweist.

7. Kommunikationssteuereinheit mit einem System zum Auswählen von Adapterschaltungen, die zwischen Dienstleistungen verschiedener Prioritäten anfordernden Datenstationen und einer zentralen Kommunikationseinheit angeordnet sind, wobei die Adapterschaltungen in Untergruppen oder Karten aufgeteilt und die Karten auf Platten angebracht sind, und wobei diese Platten ihrerseits in auf Rahmen angeordneten Untergruppen aufgeteilt sind, dadurch gekennzeichnet, daß die Kommunikationssteuereinheit folgende Mittel aufweist:

— erste asynchrone Vorauswahlmittel zur Vorauswahl des die höchste Priorität besitzenden Adapters aus jeder Platte,
— zweite asynchrone Vorauswahlmittel zur Vorauswahl der den die höchste Priorität besitzenden Adapter tragenden Platte aus jedem Rahmen,
— dritte asynchrone Vorauswahlmittel zur Vorauswahl des Rahmens mit der Platte, die ihrerseits den die höchste Priorität besitzenden Adapter trägt, und
— Mittel zur Herstellung des Übertragungsweges, der die Zentraleinheit über diese Vorauswahlmittel mit dem die höchste Priorität besitzenden Adapter verbindet.

**Claims**

1. A system for selecting interface circuits interconnecting service requesting elements having different priorities and a central unit, characterized in that it includes:

means for dividing said interface circuits forming a first pyramid stage into subgroups provided with asynchronous preselection means for asynchronously preselecting the interface circuit having the highest priority within each of said subgroups,

means for interfacing each of said first-stage subgroups by means of a second-stage interface circuit,

means for dividing said second-stage interface circuits into subgroups provided with asynchronous preselection means for asynchronously preselecting the interface circuit having the highest priority within each of the second-stage subgroups,

means for completing the pyramid-type organization of the selection system and connecting the last stage of the pyramid to the central unit bus,

means for establishing the path, through said pyramid, from the central unit to the first-stage interface circuit having the highest priority.

2. A system for selecting interface circuits according to claim 1, characterized in that said means for completing the pyramid-type organization of the selection system comprise:

means for interfacing each of the subgroups of a stage being considered by means of an interface circuit of the following stage, said interface circuits of the following stage being provided with asynchronous preselection means for selecting the interface circuit having the highest priority among said interface circuits of the following stage, and

means controlled by the preselection means to establish the path connecting the central unit with the first-stage interface through said pyramid.

3. A system for selecting interface circuits according to claim 1 or claim 2, characterized in that said asynchronous preselection means of each of the subgroups comprise:

a priority bus interconnecting the interfaces of the subgroup,

means for communicating, through said priority bus, the priority levels of the service requests addressed to the other interfaces of the subgroup,

comparison means supplying a logic information when the highest priority addressed to the interface being considered is of a level at least equal to that of the highest priority present on the priority bus at the position of said interface,

switching means,

selection means going through said subgroup from downstream to upstream and being responsive to the logic information supplied by said comparison means to provide logic preselection and control information for said switching means.

4. A system for selecting interface circuits according to claim 3, characterized in that said switching means are connected in such a way that the establishment of the path from the central unit bus to the first-stage adapter having the highest priority is oriented through the interfaces of the pyramid either horizontally on the same stage or vertically towards the adjacent stage, depending on whether the interface being considered has or has not been preselected.

5. A system for selecting interface circuits according to claim 4, characterized in that it is incorporated in a communication controller where said interfaces of the first stage are adapters and those of the other stages of the pyramid are line driver interfaces.

6. A system for selecting circuit interfaces according to claim 5, characterized in that the adapters are individually disposed on cards, each card subgroup being placed on a board furthermore provided with a pyramid second-stage driver interface and each board subgroup being disposed on a frame also provided with a pyramid third-stage driver interface.

7. A communication controller comprising an adapter circuit selection system located between service request terminals having different priorities and a central communication unit, said adapter circuits being divided into subgroups or cards, said cards being placed on boards, said boards being in turn divided into subgroups placed on frames, said system being characterized in that it comprises:

first asynchronous preselection means for preselecting the adapter having the highest priority within each board,

second asynchronous preselection means for preselecting the board comprising the adapter having the highest priority within each frame,

third asynchronous preselection means for preselecting the frame with the board including the adapter having the highest priority,

means for establishing the path connecting the central unit for the adapter having the highest priority through said preselection means.

FIG. 1

0011 701

FIG. 2

0011701

FIG. 3

SORTIE
H
SEL CC
A4
D2
A3
I
A5
Pi
A6
ADAPT SELECT.
V
IN40
TA
R2
SEL CC
ENTREE
MICROPROG
TD
C
R1
PR
AP
A2
DEC
D1
PR BUS CC
SERV RQ
L1
L2
A1
DR
CCU BUS
E/S

3

FIG. 4

PR BUS PP

ENTREE SEL PP

R5

SW

D3    R3

C1

I1    A8    D5    →    H

A7

R4    D4

PR BUS CC

V

0011701